# EUROPEAN PATENT SPECIFICATION

(11) **EP 0 932 335 B1**
(45) Date of publication and mention of the grant of the patent: **02.11.2000**
(21) Application number: 96927475.2
(22) Date of filing: 22.08.1996
(51) Int. Cl.: A01K 83/00

(54) **BARBLESS FISHING HOOK**
ANGELHAKEN OHNE WIDERHAKEN
HAME ON DE PECHE SANS ARDILLON

(30) Priority: 18.10.1995 US 5350 P
(43) Date of publication of application: 04.08.1999
(73) Proprietor: Ivarson, James K., Armstrong, British Columbia V0E 1B0 (CA)
(72) Inventor: Ivarson, James K., Armstrong, British Columbia V0E 1B0 (CA)
(74) Representative: Ryan, Anne Mary
(86) International application number: CA9600565
(87) International publication number: WO9714302

(56) References cited:
- GB-A- 223 137
- GB-A- 2 267 423
- US-A- 2 841 914
- US-A- 5 386 660

## Description

### Field of the Invention

This invention relates to the field of fishing hooks, and in particular to barbless fishing hooks.

### Background of the Invention

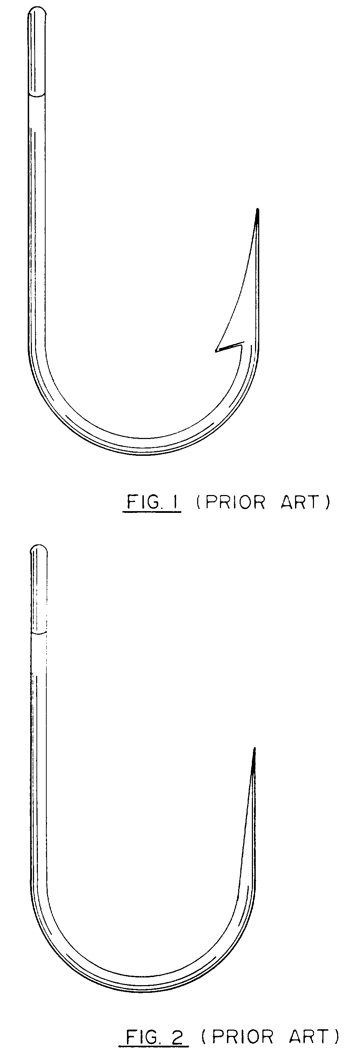

Presently, in many parts of the world, sport fishing regulations are demanding so-called "catch and release" fishing. This means that fish caught with conventional barbed hooks such as depicted in Figure 1 may be repeatedly wounded by tearing of the skin and flesh, usually in the vicinity of the fish's mouth, every time the fish is caught and released. Often, as lakes are stocked with smaller fish, such catch and release of small fish. when they have been caught using a barbed hook, results in the death of the fish.

Consequently, regulations are now being put into place requiring eatch and release fishing to be done with barbless hooks.

The barbless hooks presently being used are, as depicted in Figure 2, hooks which merely come to a point in the manner of a spike. It has been found that a drawback of such barbless hooks is a "stiletto" effect in that while a fish is fighting the hook, if the hook is a barbless hook, the hook repeatedly releases within the mouth of the fish and then re-penetrates the fish in a different position. The stiletto effect thus often results in repeated wounding of the fish which is of course contrary to the intention behind using a barbless hook.

Attempts in the prior art at creating useful and effective barbless hooks appear to have overlooked two fundamental physical properties of the fish during the three phases of the acquisition and release of the fish. The three phases may be summarized as:
(a) the strike phase in which the target fish, having been attracted by the bait, bites at the bait thereby taking the hook into its mouth.
(b) the fight phase in which the hook is set in the fish's mouth by the penetration of the spike (and the penetration of the barb if a conventional fishing hook) into the flesh and tissue of the fish's mouth and by the reaction of the fish in fighting to dislodge the spike from the wound, including the reeling-in and capture of the fish,
(c) the release phase in which the fish is held and the fishing hook manually removed by forcing the spike backwards through the penetration wound.

During all three phases it is desirable, in order to minimize damage to the fish, to minimize tearing or cutting of the flesh during the strike, to retain the spike in place once set following the strike, and to retain the spike in place and minimize sawing and cutting of the flesh during the ensuing fight, reeling-in and capture of the fish, and to minimize the tearing or cutting of the flesh during removal of the spike prior to the release of the fish. In order to accomplish this it must be kept in mind that the flesh and tissue of the fish, in the mouth region in particular, have certain mechanical properties which, depending on the design of the fishing hook, will determine whether a single clean puncture wound is accomplished, or whether the result is tearing, cutting or sawing of the initial puncture wound. The primary mechanical properties are the elasticity and the strength of the flesh and tissue, governed in part by the stress and strain properties of the flesh and tissue material.

Referring to soft tissue generally, living soft tissues are generally non-linearly elastic and somewhat stress-history dependent. Generally speaking, biological solids such as the flesh and tissue of a fish's mouth are multiphase, non-homogeneous and anisotropic. Such is the case within a fish's mouth where a fish hook may set in virtually any location and orientation. However, if generalizing assumptions are made about the average aggregate stress and strain properties of the fish's mouth, then it may be seen that prior art designs, if it were their object to minimize damage to a fish, were ineffective. Those generalized assumptions may be made based on a typical connective tissue in an animal. For example, studies have been conducted of the rabbit mesentery, the thin membrane that connects the intestines. In simple tensile testing the mesentery exhibits a non-linear, exponential load versus extension relationship indicative of the stress-strain relationship, that is, there was small stress in response to fairly large strain up to a point, after which the stress increased rapidly in response to a small further strain. The data once reduced to the Lagrangian stress (the force divided by the relaxed cross sectional area) and the extension ratio (of the deformed length divided by the relaxed length), revealed, when the rate of change of the Lagrangian stress relative to the extension ratio was plotted against the elastic tension, that the resulting plot was linear for relatively low extension ratios not exceeding 2.5 for mesentery and 2 for skin and muscles (Y.C. Fung. "Elasticity of Soft Tissues in Simple Elongation" American Journal of Physiology, 213,6 (1967) 1532-1544).

Consequently, for soft tissue, in that it would appear that such exponential type of material is natural in the biological world, where the sample is not elongated to more than double its relaxed length, relatively small stress will result, minimizing the risk of failure of the tissue (i.e. tearing) and increasing the probability of a nearly perfectly elastic hysteresis. The mesentery study indicated nearly perfectly elastic hysteresis, although hysteresis did exist, and that hysteresis was not affected greater by strain rate (although not the strain rate likely encountered by fish tissue during the strike phase). Extending this result then to a circular penetration wound in soft tissue, assuming the stress concentration around the puncture hole is approximately evenly distributed. and assuming the mesentery study is indicative of the elastic properties of the soft tissue of a fish's mouth, even given greater strain rates during the strike phase, then for puncture holes where the circumference remains small, stress will not build-up excessively, i.e. so as not to cause failure of the soft tissue under the circumferential loading, as the puncture hole opens to admit the cylindrical spike of the fishing hook.

It is also known that a very slender hole or slot (i.e. where the length to width ratio of the hole is large) elongated perpendicular to the direction of simple tensile forces causes a very high stress concentration at the ends of the elongated hole. thus resulting in cracking or tearing transversely to the tensile force (Timoshenko and Goodier. Theory of Elasticity. 3rd Ed. (1970). McGraw-Hill. New York). By analogy then, a barb or like sharply pointed projection extending outwardly from the shaft of the fishing hook adjacent the spike of the fishing hook elongates the puncture hole in the soft tissue as the barb or projection is forced through the tissue. Although obviously more complex than simple tensile loading on the puncture hole, it is fair to assume a stress concentration around the puncture hole at the locus of elongation occurs when the locus of greatest elongation is a very narrow region or point, thereby increasing the likelihood of tearing or actual cutting of the soft tissue by the barb or projection in the strike phase exacerbated by the magnitude of the strain rate, and increasing the likelihood of tearing and cutting because of a sawing action of the barb or projection moving in and out of the puncture hole during the fight phase.

Thus, in United States patent no. 2.841.914 which issued to Butler on July 8. 1958, for Fish Hooks, what is taught is a barbless fish hook where the barb is replaced by a projection which has a point or transverse ridge of very small length defined by the intersection of two adjacent concave surfaces blending with the return arm. These surfaces, it would appear, may be formed by, for example, filing down the barb of a conventional barbed fish hook. The resulting point or transverse ridge, relied on to form a bulge on the return arm to thereby keep a fish on the hook, would, if the projection was actually large enough to keep a fish on the hook without the stiletto effect during the fight phase, result in stress concentrations causing the soft tissue of the fish's mouth to tear or be cut.

In the release phase, it is fair to say that a lot, if not most, anglers are inept at holding a struggling fish still with one hand so as to gently remove a hook, be it barbed or not. from a fish's mouth using pliers or the like so as not to tear or cut the soft tissue of the mouth. A simple single grasp and pull movement is all that can reasonably be expected of those anglers who are not surgeons. Such a motion to remove a barbed hook set in a fish's mouth inevitably causes tear damage.

Such a motion to remove the barbiess hook of Butler would pull the sharp point or ridge of the fish retaining projection across the soft tissue so as to cut the soft tissue, especially if the projection was actually large enough to keep a fish on the hook during the fight phase. Such a motion to remove the Fishing Hook with Curved Barb of Levin, which issued as United States patent no 5, 386,660 on February 7, 1995, would also be difficult without tearing the soft tissue because the barb is undercut behind the barb, thereby undesirably increasing the strain rate on the soft tissue as the tissue has to travel and expand around the increased distance and reversed direction to that in which the soft tissue is being pulled in order to clear the curved barb. This increases the likelihood of tearing. In the Levin hook, the cross section of the return portion at the barb is flat-sided and has a blunt ridge with pronounced corners between the ridge and sides, and so. as with the Butler device, the projection of the barb must be significant in order to effectively set the hook, i.e. in order to have sufficient volume in the barb so that it sets the hook. This results in a significantly elongated puncture hole when the soft tissue is under its greatest stress, that is. at the point where the puncture hole is most elongated so as to cause a stress concentration at the elongated end, and in particular at the comers between the ridge and the sides of the barb. Again, this increases the likelihood of tearing of the soft tissue upon removal of the hook from the soft tissue.

Applicant is also aware of published patent application GB-A-2267423, for Hooks for use by Anglers, filed by Keightley. Keightley teaches a hook for use by anglers comprising a shank terminating in a contoured point, the angle made between the end of the contoured point remote from its tip and the shank as the point end approaches and merges with the shank being no less than 90°. The shank terminates in a point which is contoured to include a diverging tip section which merges smoothly into a converging section which in turn merges smoothly into the shank of the hook. The end face of the point remote from its tip may be round to the shank or may sub tend an angle greater than 90° to the shank. The point may be formed symmetrically about a straight line defining an extension of the longitudinal axis of the end of the shank adjoining the point; alternatively the point may be formed symmetrically about a curved line which defines an extension of the longitudinal axis of the end of the shank adjoining the point. What is neither taught nor suggested is the use of an asymmetric bulbous surface between the point and the shank as the barbless hook.

### Summary of the Invention

In the barbless hook of the present invention, instead of the use of a barb, a "fin" having a dome extends inwardly of the pointed spike portion of the fishing hook shank. The fin has a longitudinally gently inclined leading surface extending between the spike on the hook and the smoothly rounded dome between the gently inclined edge and a smoothly inclined rearmost surface blending with the shank of the hook.

It has been found that because of the elastically resilient nature of the soft tissue of a fish's mouth, that an appropriately sized fin on the improved barbless hook of the present invention, will have the following benefits:
a) upon penetration of the hook through a fish's mouth, the gently inclined leading surface merely stretches the tissue of the fish's mouth allowing entry of the domed fin through the penetration hole without tearing of the tissue,
b) once the leading surface of the fin has passed through the penetration hole, the rounded dome and inclined rearward surface allows the tissue of the fish's mouth to close in an elastically resilient fashion around the shaft of the hook, the rounded smooth domed fin surface allowing a larger fin by volume without tearing the tissue to allow more effective setting of the hook,
c) because the tissue does not tear, but rather remains as a small penetration hole, the rearward surface acts to anchor the fin (and consequently the entire hook) within the fish's mouth much as in the manner of a conventional barbed hook,
d) when it is desired to remove the hook from the fish's mouth, again without tearing the tissue of the fish's mouth, the fact that the rearward surface is not vertical but is smoothly inclined combined with the rounding of rounded dome. allows for the fin and hook to be "popped", ie. released by elastically re-stretching open the penetration hole in the tissue of the fish's mouth, so as to remove the hook from the penetration hole without tearing of the tissue of the fish's mouth.

The barbless fishing hook has a shank having a longitudinal axis and a spike at one end, and extending longitudinally along the shank adjacent to the spike, a radially expanded surface extending radially outwardly of the longitudinal axis so as to define, in a first plane perpendicular to the longitudinal axis, a smoothly rounded generally radial arc devoid of stress concentration causing corners or elongate protrusions and so as to define, in a second plane containing the longitudinal axis, along the intersection of the second plane with the radially expanded surface, a line of intersection smoothly blending the radially expanded surface with the spike at one end of the line of intersection and with the shank at an opposed end of the line of intersection and the distance between the line of intersection and the longitudinal axis, perpendicular to the longitudinal axis, increasing smoothly along the shank from the spike to a maximum radial distance where the smoothly rounded generally radial arc sweeps out a maximum area in the first plane.

In one aspect, the barbless fish hook of the present invention comprises in a first embodiment a fish hook having a shank, the shank having a spike at one end, a fin mounted to, or formed as a unitary whole with the shank, adjacent the spike, wherein the fin has a first inclined surface adjacent the spike and extending generally along the shank, the first inclined surface smoothly and gently inclined between the spike and a domed vertex on the fin, wherein the domed vertex has a smoothly rounded surface extending between the first inclined surface and a second smoothly inclined surface extending generally along the shank between the domed vertex and the shank, and opposed first and second sides extending smoothly laterally outward of the shank between the portion of the shank extending beneath the fin, and the domed vertex.

Advantageously the domed vertex and the first and second sides form a bulbous surface having a domed surface profile in three mutually orthogonal planes intersecting within the volume defined by the bulbous surface.

Alternatively, instead of a fin formed as a unitary whole with the shank, the shank is enlarged in the form of a cone so that a generally conical surface extends from said spike along said shank, the conical surface expanding increasing radially outward of the shank, the conical surface truncated at a truncation location along the shank, a truncation surface at the truncation location extending between the conical surface and the shank so as to form a collar extending in a radial arc around the shank.

The truncation surface may be also formed as an annular groove between the conical surface and the shank. In either case, whether the truncation surface is, generally, a collar or, specifically, an annular groove, the truncation surface blends smoothly with the shank without introducing any undercut in the manner of a barb, that is, any undercut in a return direction along the shank back towards the spike.

### Brief Description of the Drawings

Figure 1 is a prior art barbed fishing hook.

Figure 2 is a prior art barbless fishing hook.

Figure 3 is, in partial perspective view, the barbless fishing hook of the present invention.

Figure 4a is, in side elevation view, the barbless fishing hook in Figure 3.

Figure 4b is, in side elevation view, an alternative embodiment of the barbless fishing hook of the present invention.

Figure 5a is the barbless fishing hook of Figure 4a along line 5a - 5a.

Figure 5b is the barbless fishing hook of Figure 4b along line 5b - 5b.

Figure 6 is, in side elevation view, an alternative embodiment of the barbless fishing hook of the present invention.

Figure 7 is, in partial perspective view, the barbless fishing hook of Figure 6.

### Detailed Description of Preferred Embodiments

Figure 1 is a prior art barbed fishing hook. Figure 2 is a prior art barbless fishing hook.

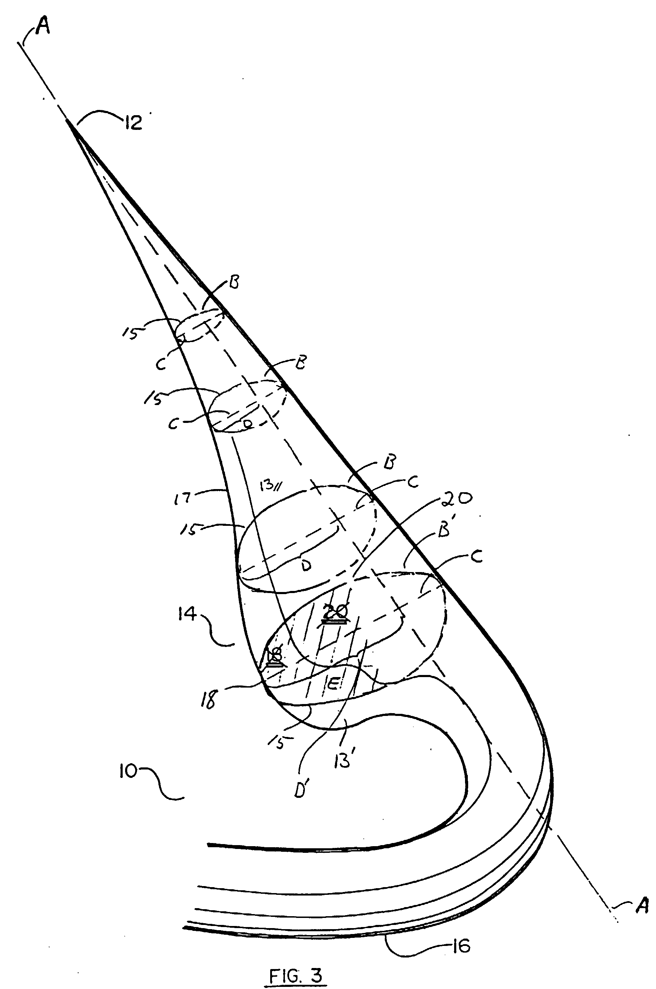

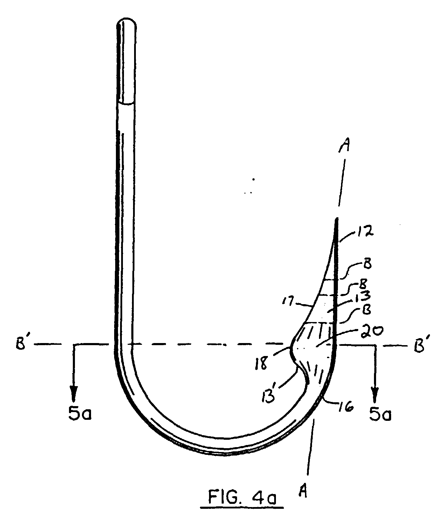

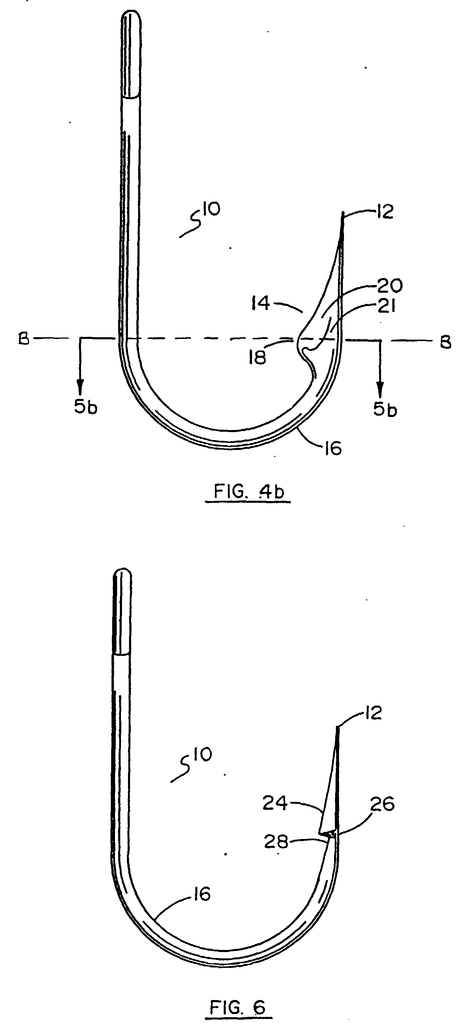

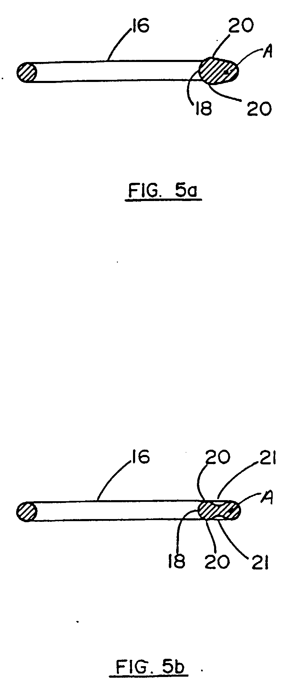

In one preferred embodiment of the present invention, as depicted in Figures 3, 4a and 5a, and in an alternative preferred embodiment depicted in Figures 4b and 5b, barbless fishing hook 10 has spike 12, fin 14 and shank 16. Fin 14 is a three dimensional bulbous surface including a domed vertex 18 and bulbously convexly curved opposed sides 20. In the embodiment of Figures 4a and 5a, sides 20 and domed vertex 18 are convexly curved about a centroid of fin 14. In the embodiment of Figures 4b and 5b, sides 20 have generally longitudinal grooves or depressions 21 so as to appear as waisting in the cross-sectional profile of Figure 5b. In both embodiments the convexly curved sides and domed vertex reduce stress concentrations in the soft tissue surrounding the penetration hole thereby minimizing the risk of a localized area of stress concentration which would cause tearing, and maximizing the length of the circumference of the bulbous surface, in other words, maximizing the volume of fin 14 which may be passed through the puncture hole in the fish's mouth without causing tearing or causing inelastic deformation to thereby adversely affect the elastic hysteresis of the soft tissue around the puncture hole.

Shank 16 has a longitudinal axis A. Spike 12 extends longitudinally along the shank. A radially expanded surface 13 extends radially outwardly on one side of longitudinal axis A so as to define, in a plane B perpendicular to longitudinal axis A, a smoothly rounded generally radial arc 15 devoid of stress concentration causing corners or elongate protrusions and so as to define, in a second plane C containing longitudinal axis A, along the intersection of the second plane C with the radially expanded surface 13, a line of intersection 17 smoothly blending the radially expanded surface 13 with the spike 12 at one end of line of intersection 17 and with shank 16 at an opposite end of line of intersection 17. Plane B is illustrated as an array of parallel cross sections, in dotted outline, but understood to represent any plane parallel to those cross sections along shank 16. The distance D between line of intersection 17 and longitudinal axis A, where distance D is perpendicular to longitudinal axis A, increases smoothly along shank 16 from spike 12 to a maximum radial distance D', where the smoothly rounded generally radial arc 15 sweeps out a maximum area E in plane B'. Truncation surface 13' adjacent domed vertex 18 then smoothly rounds off radially inward from domed vertex 18 to merge truncation surface 13' with shank 16, without creating, in the manner of a barb, an undercut under fin 14 along shank 16. As may be seen most clearly in Figs. 3, 4a, 4b, 6 and 7, the slope of truncation surface 13' is steeper than that defined by line of intersection 17 along expanded radial surface 13 between spike 12 and plane B'.

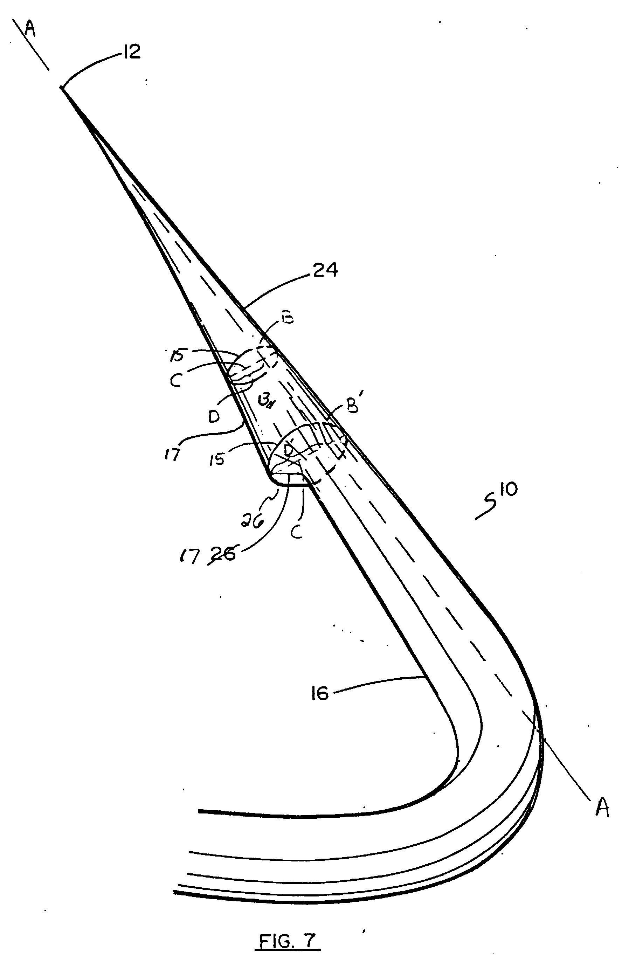

In the alternative embodiment depicted in Figures 6 and 7, instead of the bulbous rounded surface of fin 14 extending from spike 12 along shank 16, conical surface 24 extends from spike 12 along shank 16 expanding radially, about the longitudinal axis of shank 16, outwards along shank 16 from spike 12 until conical surface 24 intersects truncating surface or annular groove 26. Truncating surface or annular groove 26 extends from contiguous intersection with conical surface 24 radially inwardly to intersect the surface of shank 16. The surface of shank 16 may be waisted radially inwardly, as by waisting 28, at its intersection with truncating surface or annular groove 26.

As will be apparent to those skilled in the art in the light of the foregoing disclosure, many alterations and modifications are possible in the practice of this invention without departing from the spirit or scope thereof. For example, wherever a fin is described or shown projecting inwardly of a fish hook, it is understood that it is not a departure from the present invention to orient the fin otherwise, such as projecting outwardly of the fish hook.

Accordingly, the scope of the invention is to be construed in accordance with the substance defined by the following claims.

## Claims

1. A barbless fishing hook (10) comprising:
a shank (16) having a longitudinal axis (A) and a spike (12) at one end, and extending longitudinally along said shank adjacent to said spike, a radially expanded surface (13) extending radially outwardly on one side of said longitudinal axis so as to define, in a plane (B) perpendicular to said longitudinal axis, a smoothly rounded generally radial arc (15) devoid of stress concentration causing comers or elongate protrusions and so as to define, in a second plane (C) containing said longitudinal axis, along the intersection of said second plane with said radially expanded surface, a line of intersection (17) smoothly blending said radially expanded surface with said spike at one end of said line of intersection and with said shank at an opposite end of said line of intersection and said distance (D) between said line of intersection and said longitudinal axis, perpendicular to said longitudinal axis, increasing smoothly, so as to define a first slope, along said shank from said spike to a maximum radial distance (D') where said smoothly rounded generally radial arc sweeps out a maximum area (E) contained in said plane (B') perpendicular to said longitudinal axis, a truncation surface (13') adjacent said maximum area, on an opposite side of said plane containing said maximum area, opposite to said spike, said truncation surface smoothly rounding off said radially expanded surface so as to smoothly blend with said shank, without an undercut along said shank, said truncation surface having a second slope, said second slope steeper than said first slope.

2. The barbless fishing hook of claim 1 wherein said radially expanded surface forms a fin (14), said first slope smoothly and gently inclined so as to form an acute angle with said longitudinal axis adjacent said spike, said first slope extending between said spike and a domed vertex (18) on said fin, wherein said domed vertex has a smoothly rounded surface extending between said first slope and said truncation, said truncation surface extending generally along said shank between said domed vertex and said shank, and opposed first and second sides (20) extending smoothly laterally radially outward of said shank.

3. The barbless fishing hook of claim 2 wherein said domed vertex and said first and second sides form a bulbous surface.

4. The barbless fishing hook of claim 1 wherein said radially expanded surface is a generally conical surface (24) extending from said spike, along said shank, said conical surface smoothly expanding increasingly radially outward of said longitudinal axis, said conical surface truncated at said truncation surface.

5. The barbless fishing hook of claim 4 wherein said truncation surface is a collar.

6. The barbless fishing hook of claim 5 wherein said truncation surface forms an annular groove (26).

## Patentansprüche

1. Stachel freier Fischfanghaken (10), aufweisend:
einen Schaft (16), der eine longitudinale Achse (A) und eine Spitze (12) an einem Ende aufweist und sich longitudinal entlang des gesamten Schaftes zu der Spitze hin erstreckt; eine radial ausgedehnte Oberfläche (13), die sich radial nach außen hin auf einer Seite der longitudinalen Achse erstreckt, so daß, in einer Ebene (B) senkrecht zu der longitudinalen Achse, ein sanft abgerundeter, im allgemeinen radialer Bogen (15) definiert wird, der frei von Spannungskonzentration verursachenden Ecken oder länglichen Vorsprüngen ist, so daß in einer zweiten Ebene (C), welche die longitudinale Achse enthält, entlang der Schnittlinie der zweiten Ebene mit der radial ausgedehnten Oberfläche, eine Schnittlinie (17) definiert wird, die allmählich in die radial ausgedehnte Oberfläche mit der Spitze an einem Ende der Schnittlinie und mit dem Schaft an dem entgegengesetzten Ende der Schnittlinie übergeht und wobei der Abstand (D) zwischen dcr Schnittlinie und der longitudinalen Achse, senkrecht zu der longitudinalcn Achse allmählich ansteigt, so daß eine erste Schräge entlang des Schaftes, ab der Spitze bis zu einem maximalen Abstand (D') definiert wird, wo der sanft gerundete, im allgemeinen radiale Bogen in einen maximalen Bereich (E) ausläuft, der in der Ebene (B') senkrecht zu der longitudinalen Achse enthalten ist; eine sich verjüngende Oberfläche (13') angrenzend an den Bereich, an einer entgegensetzten Seite der den maximalen Bereich enthaltenden Ebene, gegenüber der Spitze, wobei sich die, sich verjüngende, Oberfläche sanft gegen die radial sich ausdehnende Oberfläche abrundet, so daß sie allmählich in den Schaft übergeht, wobei die sich verjüngende Oberfläche eine zweite Schräge aufweist und die zweite Schräge steiler als die erste Schräge ist.

2. Stachelfreier Fischfanghaken nach Anspruch 1, bei dem die sich radial ausdehnende Oberfläche eine Rippe (14) bildet, die erste Schräge allmählich und sanft geneigt ist, so daß ein spitzer Winkel mit der longitudinalen Achse in der Nähe der Spitze gebildet wird, wobei sich die erste Schräge zwischen der Spitze und einem gewölbten Scheitel (18) erstreckt, wobei der gewölbte Scheitel eine sanft abgerundete Oberfläche aufweist, die sich zwischen der ersten Schräge und der sich verjüngenden Oberfläche streckt, wobei die sich Verjüngende Oberfläche im allgemeinen entlang des Schaftes zwischen dem gewölbten Scheitel und dem Schaft erstreckt, und bei sich einander entgegengesetzte erste und zweite Seiten (20) sich allmählich radial außerhalb des Schaftes erstrecken.

3. Stachelfreier Fischfanghaken nach Anspruch 2, bei dem der gewölbte Scheitel der ersten und zweiten Seiten eine knollenförmige Oberfläche bilden.

4. Stachelfreier Fischfanghaken nach Anspruch 1, bei dem die sich radial erstreckende Oberfläche eine im allgemeinen konische Oberfläche (24) ist, die sich von der Spitze entlang des Schaftes erstreckt, wobei sich die konische Oberfläche allmählich zunehmend radial nach außerhalb der radialen Achse ausdehnt, wobei die konische Oberfläche an der sich verjüngenden Oberfläche abgestampft ist.

5. Stachelfreier Fischfanghaken nach Anspruch 4, wobei die sich verjüngende Oberfläche ein Kragen ist.

6. Stachelfreier Fischfanghaken nach Anspruch 5, wobei die sich verjüngende Oberfläche eine ringförmige Vertiefung (26) bildet.

## Revendications

1. Hameçon de pèche (10) sans barbillon caractérisé en ce qu'il comprend :
un corps (16) ayant un axe longitudinal (A) et une pointe (12) à une extrémité, et s'étendant longitudinalement le long dudit corps adjacent à ladite pointe, une surface (13) s'étendant radialement vers l'extérieur d'un côté dudit axe longitudinal de manière à définir, dans un plan (B) perpendiculaire audit axe longitudinal, un arc radial (15) dans 1'ensemble doucement arrondi dépourvu de concentration de tension provoquant des angles ou des saillies et de façon à définir, dans un second plan (C) contenant ledit axe longitudinal, le long de l'intersection dudit second plan avec ladite surface s'étendant radialement, une ligne d'intersection (17) confondant doucement ladite surface s'étendant radialement avec ladite pointe à une extrémité de ladite ligne d'intersection, et avec ledit corps à une extrémité opposée de ladite ligne d'intersection, et ladite distance (B) entre ladite ligne d'intersection et ledit axe longitudinal, perpendiculaire audit axe longitudinal, augmentant doucement, de manière à définir une première pente, le long dudit corps à partir de ladite pointe jusqu'à une distance radiale maximale (D') où ledit arc radial balaie une aire maximale (E) contenue dans ledit plan (B') perpendiculaire audit axe longitudinal, une surface tronquée (13') adjacente à ladite aire maximale, du côté opposé audit plan contenant ladite aire maximale, opposée à ladite pointe, ladite surface tronquée arrondissant doucement ladite surface s'étendant radialement, de façon à doucement se confondre avec ledit corps, sans cassure le long dudit corps, ladite surface tronquée ayant une seconde pente, ladite seconde pente étant plus raide que ladite première pente.

2. Hameçon de pèche (10) sans barbillon selon la revendication 1, caractérisé en ce que ladite surface s'étendant radialement forme un aileron (14), ladite première pente s'inclinant légèrement et doucement de façon à former un angle aigu avec ledit axe longitudinal adjacent à ladite pointe, ladite première pente s'étendant entre ladite pointe et un sommet (18) en forme de dôme sur ledit aileron, dans lequel ledit sommet a une surface doucement arrondie s'étendant entre ladite première pente et ladite surface tronquée, ladite surface tronquée s'étendant dans son ensemble le long dudit corps entre ledit sommet et ledit corps, et les premier et second côtés (20) s'étendant doucement latéralement et radial eurent vers l'extérieur dudit corps.

3. Hameçon de pêche (10) sans barbillon selon la revendication 2, caractérisé en ce que ledit sommet en forme de dôme et lesdits premier et second côtés forment une surface bulbeuse.

4. Hameçon de pêche (10) sans barbillon selon la revendication 1, caractérisé en ce que ladite surface s'étendant radialement est une surface (24) dans son ensemble conique s'étendant à partir de ladite pointe, le long dudit corps, ladite surface conique s'étendant doucement de plus en plus radialement vers l'extérieur dudit axe longitudinal, ladite surface conique étant tronquée au niveau de ladite surface tronquée.

5. Hameçon de pêche (10) sans barbillon selon la revendication 4, caractérisé en ce que ladite surface tronquée est un col.

6. Hameçon de pêche (10) sans barbillon selon la revendication 5, caractérisé en ce que ladite surface tronquée forme une rainure (26) annulaire.
